(19) **Europäisches Patentamt / European Patent Office / Office européen des brevets**

(11) **EP 2 258 533 B1**

(12) **EUROPEAN PATENT SPECIFICATION**

(45) Date of publication and mention
of the grant of the patent:
**11.04.2018 Bulletin 2018/15**

(21) Application number: **08870602.3**

(22) Date of filing: **08.08.2008**

(51) Int Cl.:
**B29C 45/60** *(2006.01)*    **B29C 47/60** *(2006.01)*
**B29C 47/08** *(2006.01)*    B29C 47/10 *(2006.01)*

(86) International application number:
**PCT/JP2008/064336**

(87) International publication number:
**WO 2009/090772 (23.07.2009 Gazette 2009/30)**

(54) **SCREW AND INJECTION DEVICE**

SCHRAUBE UND INJEKTIONSVORRICHTUNG

VIS ET DISPOSITIF D'INJECTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.01.2008 JP 2008009662**
**13.03.2008 JP 2008064205**

(43) Date of publication of application:
**08.12.2010 Bulletin 2010/49**

(73) Proprietors:
• **Sumitomo Heavy Industries, Ltd.**
**Tokyo 141-6025 (JP)**
• **Spiral Logic Limited**
**11 Wang Chiu Rd, Kowloon Bay**
**KL Hong Kong (CN)**

(72) Inventors:
• **MARUMOTO, Hirotsugu**
**Chiba-shi**
**Chiba 263-0001 (JP)**
• **TAKEUCHI, Shigeru**
**Chiba-shi**
**Chiba 263-0001 (JP)**
• **WASHIDA, Kohei**
**Chiba-shi**
**Chiba 263-0001 (JP)**
• **GOTO, Daisuke**
**Chiba-shi**
**Chiba 263-0001 (JP)**

(74) Representative: **Wagner, Karl H.**
**Wagner & Geyer**
**Gewürzmühlstrasse 5**
**80538 Munich (DE)**

(56) References cited:
**WO-A1-2007/069522      JP-A- 2002 248 664**
**JP-A- 2005 131 854      US-A- 2 896 253**
**US-A- 3 160 916**

• **BUERKLE E ET AL: "SPRITZGIESSSCHNECKEN", KUNSTOFFE INTERNATIONAL, CARL HANSER VERLAG, MUNCHEN, DE, vol. 87, no. 10, 1 October 1997 (1997-10-01), XP000723385, ISSN: 0023-5563**
• **Lyondellbasell: "A Guide to Polyolefin Injection Molding", , 1 February 2002 (2002-02-01), XP055288007, Retrieved from the Internet: URL:https://www.lyondellbasell.com/globala ssets/documents/polymers-technical-literat ure/a-guide-to-polyolefin-injection-moldin g.pdf?id=13940 [retrieved on 2016-07-13]**
• **Larson Dave: "P WHAT DOES A "WADITW" COST? The Westland Corporation", , 30 December 2007 (2007-12-30), pages 1-4, XP055287974, Retrieved from the Internet: URL:http://reiloyusa.com/content/upload/fi les/Vol 4 Iss 1 Screw Geometry Resins.pdf [retrieved on 2016-07-13]**

**Description**

Technical Field

The present invention relates to a screw and an injection device.

Background Art

Conventionally, in a molding machine, for example, an injection molding machine, a molded article can be obtained by injecting resin as a molding material, which is heated and melted in a heating cylinder, into a cavity space of a metal mold device under high pressure so as to fill up the cavity space, and then cooling and solidifying the resin in the cavity space.

To this end, the injection molding machine has a metal mold device, a mold clamping device, and an injection device. The mold clamping device includes a fixed platen and a movable platen, and the mold closing, the mold clamping, and the mold opening of the metal mold device are carried out by the advance or retreat of the movable platen by a mold clamping cylinder.

On the other hand, as the injection device, in general, an in-line screw type injection device is used, and the injection device includes a heating cylinder which heats and melts resin supplied from a hopper, and an injection nozzle which injects the melted resin. A screw is disposed in the heating cylinder so as to be able to rotate and to be able to advance or retreat. Then, the resin is injected from the injection nozzle by advancing the screw by a driving device connected to a back end of the screw, and the measuring of the resin is performed by moving back the screw by the driving device.

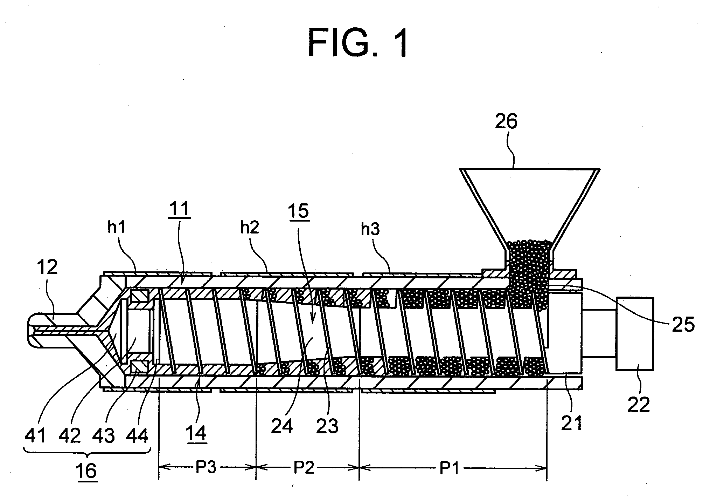

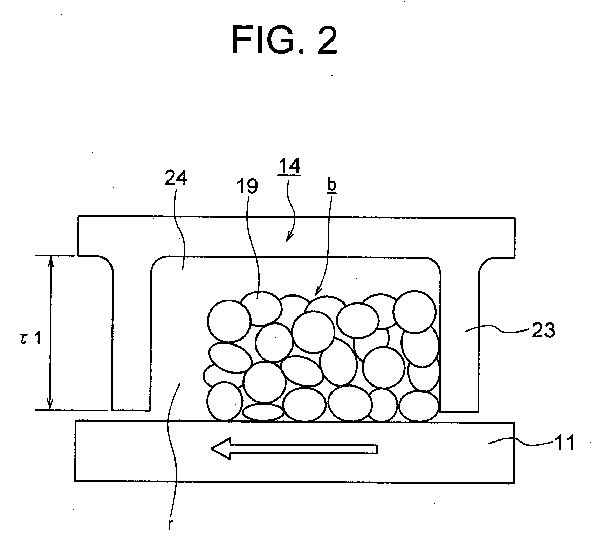

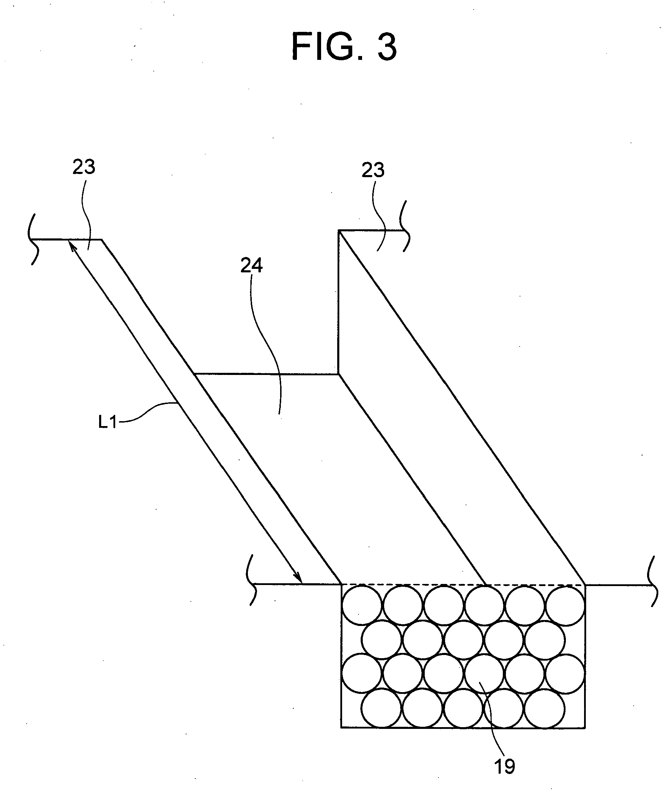

Fig. 1 is a cross-sectional view showing a main section of an injection device in the past, Fig. 2 is a conceptual diagram showing a state where resin melts in the injection device in the past, and Fig. 3 is a diagram explaining the extended distance of a groove in a screw in the past.

In the drawings, reference numeral 11 denotes a heating cylinder. An injection nozzle 12 is mounted on the front end of the heating cylinder 11, and heaters h1 to h3 for heating the heating cylinder 11 are disposed to surround the outer circumference of the heating cylinder 11. Further, a screw 14 is disposed in the heating cylinder 11 so as to be able to rotate and to be able to advance or retreat. Then, the screw 14 is composed of a flight forming section 15 and an injection section 16 and connected to a driving device (not shown) through a shaft section 21 and a coupler 22, which are provided at the back end of the screw. The injection section 16 is composed of a head portion 41, a rod portion 42 formed at the rear of the head portion 41, a return check ring 43 disposed in the surroundings of the rod portion 42, and a seal ring 44 mounted on the front end of the flight forming section 15. In addition, a screw head is constituted by the head portion 41, the rod portion 42, and the like.

Also, the return check ring 43 and the seal ring 44 function as a back-flow prevention device which prevents resin from flowing back at the time of an injection process. The driving device is composed of a motor for injection and a motor for measuring. Then, the flight forming section 15 includes a rod-shaped main body portion and a spiral flight 23 formed on the outer circumferential surface of the main body portion, and a spiral groove 24 is formed along the flight 23.

A resin supply port 25 is formed in the vicinity of the back end of the heating cylinder 11, and a funnel-shaped hopper 26 is disposed at the resin supply port 25. Then, resin contained in the hopper 26 is supplied into the heating cylinder 11 through the resin supply port 25.

The resin supply port 25 is formed at a place which faces the back end portion of the groove 24 in a state where the screw 14 is placed at a most forward position, that is, an advance limit position in the heating cylinder 11. Also, a supply zone P1 to which resin is supplied from the hopper 26 through the resin supply port 25, a compression zone P2 which melts the supplied resin while compressing it, and a measuring zone P3 which measures the melted resin by a constant amount are formed at the flight forming section 15 in order from the rear to the front.

In the injection device having the above-described configuration, at the time of a measuring process, if the screw 14 is rotated by the driving of the motor for measuring, the resin supplied from the hopper 26 into the heating cylinder 11 advances along the groove 24 through, in order, the supply zone P1, the compression zone P2, and the measuring zone P3, is heated by the heaters h1 to h3 in the interval, further, subjected to a shearing force in a space (shearing space) formed between the inner circumferential surface of the heating cylinder 11 and the groove 24, thereby performing heat generation (hereinafter referred to as "shearing heat generation"), and then melted, and in accordance with this, the screw 14 is retreated in the supply zone P1.

Then, since the return check ring 43 is relatively moved forward with respect to the rod portion 42 in accordance with the retreat of the screw 14, the resin which has reached the front end of the flight forming section 15 passes through a resin flow path between the rod portion 42 and the return check ring 43 and is then sent to the front of the screw head. Therefore, in a state where the screw 14 is placed at a most backward position, that is, a retreat limit position in the heating cylinder 11, the melted resin for 1 shot is stored in front of the screw head.

Next, at the time of an injection process, if the screw 14 is advanced by the driving of the motor for injection, the resin stored in front of the screw head is injected from the injection nozzle 12, thereby filling up a cavity space of the metal mold device (not shown) (refer to, for example, JP-A-2004-50415).

US 3,160,916 A discloses an extruder screw and was used as a basis for the preamble of claim 1.

WO 2007/069522 A1 discloses a screw, injector, and pressure member. The rear end of the screw is connected to a drive device. The screw has a screw head, backflow prevention device, and a plasticization member provided behind the backflow prevention device. The plasticization member has a screw body, a flight formed projecting from the outer peripheral surface of the screw body, and a pressure member formed adjacent to the backflow prevention device, in a predetermined area defined from the forward end of the screw body. The pressure member has a smooth outer peripheral surface having an outer diameter greater than that of the screw body.

US 2,896,253 A discloses a screw for handling thermoplastic resins.

JP 2002-248664 A discloses an injection molding machine having a kneading mechanism. The inner wall surface of a heating cylinder is flattened, at a position beyond the metering zone of a screw, a part the peripheral surface of which is flat and the shaft diameter of which is larger than that (trough diameter) of a place right in front of the metering zone is formed, and a molten raw material, when passes through the part, receives strong shear force.

Disclosure of Invention

Technical Problem

However, in the injection device in the past, resin supplied through the resin supply port 25 coheres during advancing in the direction of an arrow in the groove 24, as shown in Fig. 2, so that a solid bed b composed of a plurality of resin pellets 19 is formed in a melt pool r.

Since the solid bed b is formed by the overlapping of a plurality of pellets 19 in a depth direction of the groove 24, heat capacity is increased, and in addition, heat is easily transferred to the pellets 19 which exist outside, whereas heat is hardly transferred to the pellets 19 which exist inside. Therefore, heat of the heaters h1 to h3 is not efficiently transferred to all pellets 19. Accordingly, time required to melt all pellets 19 becomes longer. As a result, as shown in Fig. 3, the extended distance L1 of the groove 24 until the pellets 19 completely melt becomes longer.

Also, the pellets 19 which exist outside are sufficiently melted, whereas the pellets 19 which exist inside are not sufficiently melted. In addition, since many pellets 19 are melted mainly by shearing heat generation in accordance with the advance of the solid bed b in the groove 24, the pellets 19 cannot be uniformly melted. Therefore, the quality of a molded article is lowered.

Therefore, a screw is considered in which a depth of the groove 24, that is, a groove depth is made to be small and also a pressure member for narrowing a resin flow path is provided adjacent to the injection section 16 in a predetermined range in front of the flight forming section 15.

In this case, since the solid bed b can be prevented from being formed in the flight forming section 15, heat capacity is reduced, and in addition, heat is easily transferred to the pellets 19 which exist inside, so that heat of the heaters h1 to h3 is efficiently transferred to all pellets 19. Therefore, time required to melt all pellets 19 can be shortened, so that the extended distance L1 of the groove 24 can be shortened.

Also, since the pellets 19 which exist inside are sufficiently melted and the pellets 19 are not melted by shearing heat generation, resin can be uniformly melted.

However, if the screw is used in which the groove depth is reduced and the pressure member is provided in a predetermined range in front of the flight forming section 15, since the groove depth is small, an escape space of the pellets 19 supplied into the heating cylinder 11 through the resin supply port 25 is reduced by an according amount, so that a force which is applied to the pellet 19 in accordance with the rotation of the screw is increased.

As a result, a shearing force is generated at the pellet 19, and if the shearing force becomes a large surface pressure and is applied to the flight 23, the screw 14 is broken, so that durability of the injection device is lowered.

The present invention has an object to provide a screw and an injection device, in which by solving the problems of the injection device in the past, the time required to melt a molding material can be shortened, the extended distance of a groove can be shortened, a molding material can be uniformly melted, and also durability can be improved.

Technical Solution

To this end, the screw according to the present invention is provided as set forth in claim 1. Preferred embodiments of the present invention may be gathered from the dependent claims.

In this case, since in a predetermined section of the flight forming section, the flight is formed by a plurality of flight portions and the ratio $\gamma 1$ of the groove depth $\tau 1$ to the diameter $\delta 1$ has the relationship of $1 \leq \gamma 1 \leq 2.5$, a bias connected at its back end to the driving device.

Also, the screw has the flight forming section including the main body portion and the flight formed so as to project on an outer circumferential surface of the main body portion, and the pressure member disposed in front of the flight forming section and including a smooth outer circumferential surface.

Further, the flight is formed by a plurality of flight portions in a predetermined section of the flight forming section.

Further, in the groove depth setting section set over a range from a molding material supply point to the front, when a diameter of a molding material is $\delta 1$ and a groove depth of a groove formed along the flight is $\tau 1$, the ratio $\gamma 1$ of the groove depth $\tau 1$ to the diameter $\delta 1$ has the relationship of $1 \leq \gamma 1 \leq 2.5$.

In this case, since in a predetermined section of the flight forming section, the flight is formed by a plurality of flight portions and the ratio $\gamma1$ of the groove depth $\tau1$ to the diameter $\delta1$ has the relationship of $1{\leq}\gamma1{\leq}2.5$, a bias can be prevented from occurring in the flow of the molding material in the flight forming section. Therefore, the flow of the molding material which enters into a molding material flow path between the cylinder member and the pressure member can be made to be uniform.

Also, since a bias can be prevented from occurring in the flow of the molding material in the molding material flow path, retention of the molding material can be prevented from occurring, so that burning can be prevented from occurring in the molding material. Therefore, a molding defect can be prevented from occurring in a molded article.

Brief Description of Drawings

Fig. 1 is a cross-sectional view showing a main section of an injection device in the past.

Fig. 2 is a conceptual diagram showing a state where resin melts in the injection device in the past.

Fig. 3 is a diagram explaining the extended distance of a groove in a screw in the past.

Fig. 4 is a conceptual diagram showing a main section of an injection device in a first embodiment of the present invention.

Fig. 5 is an enlarged view showing a main section of the injection device in the first embodiment of the present invention.

Fig. 6 is a conceptual diagram showing a state where resin melts in the first embodiment of the present invention.

Fig. 7 is a diagram explaining the extended distance of the injection device in the first embodiment of the present invention.

Fig. 8 is a diagram showing the evaluation results regarding whether or not a solid bed has been formed in the first embodiment of the present invention.

Fig. 9 is a cross-sectional view of a screw in a region adjacent to a pressure member in the first embodiment of the present invention.

Fig. 10 is a cross-sectional view of a screw in a second embodiment of the present invention.

Best Mode for Carrying out the Invention

Hereinafter, embodiments of the present invention will be explained in detail with reference to the drawings. In this case, an injection molding machine as a molding machine is explained.

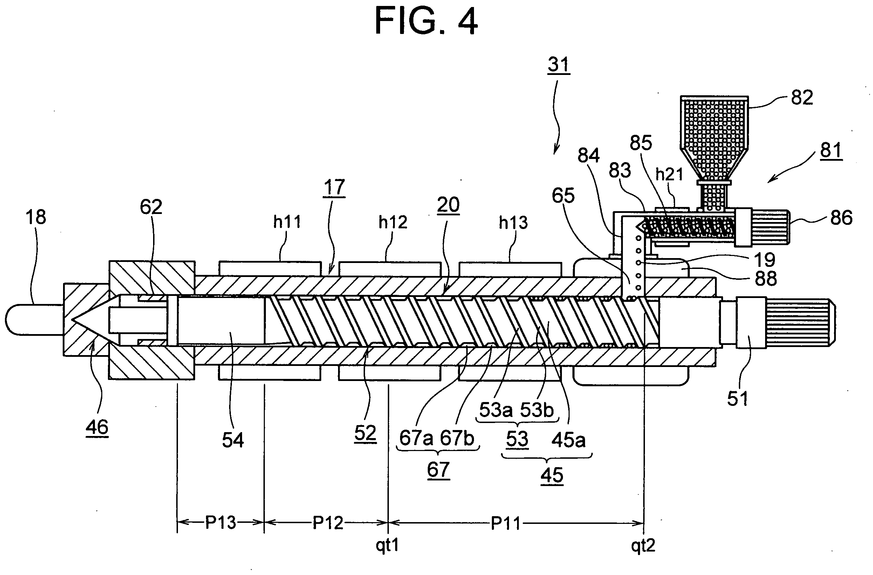

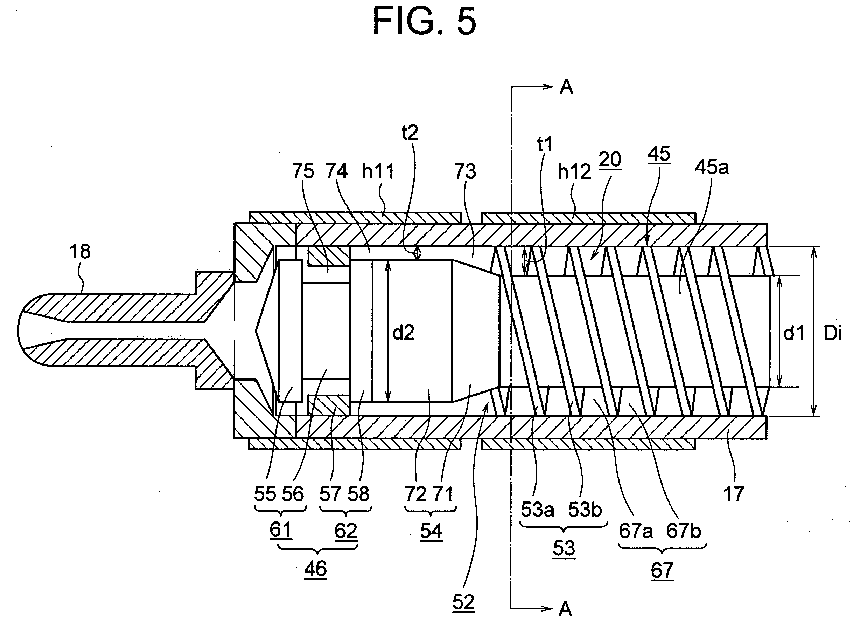

Fig. 4 is a conceptual diagram showing a main section of an injection device in a first embodiment of the present invention, and Fig. 5 is an enlarged view showing a main section of the injection device in the first embodiment of the present invention.

In the drawings, reference numeral 31 denotes an in-line screw type injection device. The injection molding machine has a metal mold device (not shown), a mold clamping device (not shown), and the injection device 31. The metal mold device includes a fixed metal mold as a first metal mold and a movable metal mold as a second metal mold, the mold clamping device includes a fixed platen on which the fixed metal mold is mounted, and a movable platen on which the movable metal mold is mounted, and the mold closing, the mold clamping, and the mold opening of the metal mold device are carried out by the advance or retreat of the movable platen by a mold clamping cylinder.

The injection device 31 includes a heating cylinder 17 as a cylinder member, an injection nozzle 18 as a nozzle member, which is mounted on the front end of the heating cylinder 17, a screw 20 which is disposed to be able to rotate and also to advance or retreat in the heating cylinder 17 and which serves as an injection member, and also as a measuring member, heaters h11 to h13 as heating members, which are mounted on the outer circumference of the heating cylinder 17 so as to surround the heating cylinder 17, a driving device (not shown) disposed at the rear of the heating cylinder 17, and the like. A space which is formed between the inner circumferential surface of the heating cylinder 17 and the screw 20 functions as a heat supply space which supplies heat from the heaters h11 to h13 to resin.

The screw 20 is composed of a screw main body 52 as an injection member main body and an injection section 46 disposed in front of the screw main body 52, and is connected to the driving device through a shaft section 51 of the back end of the screw. The screw main body 52 includes a flight forming section 45 as a plasticization section and a pressure member 54 as a kneading section, which is detachably mounted on the front end of the flight forming section 45. The flight forming section 45 includes a rod-shaped body portion 45a and a spiral flight 53 formed so as to project on the outer circumferential surface of the body portion 45a, and a spiral groove 67 is formed along the flight 53.

The flight 53 has a plurality of, in this embodiment, two, first and second flight portions 53a and 53b which are composed of projecting pieces formed to be continuously spirally wound in a predetermined section of the flight forming section 45, in this embodiment, over the entirety, in an axial direction of the flight forming section 45, and first and second groove portions 67a and 67b which constitute the groove 67 are formed along the first and second flight portions 53a and 53b. That is, the flight 53 has a multi-section flight structure, in this embodiment, a double flight structure. In addition, in the flight forming section 45, the first and second flight portions 53a and 53b are formed at a constant flight pitch in the entire area of the flight forming section 45, that is, between the front end and the back end of the flight forming section. A flight peak diameter Di which corresponds to outer diameters of the first and second flight portions 53a and 53b and a flight root diameter di which corresponds to an outer diameter of the body portion 45a are made to be constant, and the first and second groove portions 67a and 67b are formed to have a constant depth. That is, the first and second flight portions 53a and 53b are formed to be equal in height at an arbitrary position in an axial direction.

The pressure member 54 is formed adjacent to a back-flow prevention device 62 in a predetermined range from the front end of the flight forming section 45 and has a smooth region at its surface over a predetermined distance. Also, the pressure member 54 has an inclined portion 71 as a first pressure portion, which has a conical shape in which an outer diameter is increased as it goes forward, and a large-diameter portion 72 as a second pressure portion, and also as a cylinder portion, which is formed to adjoin and be connected to the front end of the inclined portion 71 and has a cylindrical shape in which an outer diameter d2 is constant in an axial direction.

Further, a threaded portion (not shown) is formed at the rear of the inclined portion 71, and a threaded hole (not shown) is formed to be opened at the front end face of the flight forming section 45. Therefore, the pressure member 54 can be mounted on the flight forming section 45 by thread-engaging the threaded portion with the threaded hole. Also, in this embodiment, the pressure member 54 is fixed to the flight forming section 45 by screw fastening. However, the pressure member may also be fixed to the flight forming section by welding in place of the screw fastening.

The outer diameter of the front end of the inclined portion 71 is made to be equal to the outer diameter d2 of the large-diameter portion 72, and the outer diameter of the back end of the inclined portion 71 is made to be equal to the flight root diameter d1. In addition, in this embodiment, the outer circumferential surface of the inclined portion 71 has a constant inclination. However, the outer circumferential surface may also be curved according to a predetermined function, if necessary.

Further, a resin flow path 73 as a first molding material flow path is formed between the inclined portion 71 and the heating cylinder 17, and a resin flow path 74 as a second molding material flow path is formed between the large-diameter portion 72 and the heating cylinder 17. In this case, as previously described, since the inclined portion 71 has an outer diameter which is increased as it goes forward, a cross-sectional area of the resin flow path 73 becomes smaller as it goes forward. Also, since the large-diameter portion 72 has the outer diameter d2 which is constant in an axial direction, a cross-sectional area of the resin flow path 74 is constant in an axial direction.

In this embodiment, the pressure member 54 is composed of the inclined portion 71 and the large-diameter portion 72. However, the pressure member may also be constituted only by an inclined portion having no undulation. In this case, an outer diameter is increased as it goes forward, an outer diameter of the back end of the pressure member 54 is equal to the flight root diameter d1, and an outer diameter of the front end of the pressure member 54 is equal to the outer diameter d2.

On the other hand, the injection section 46 is composed of a head portion 55 having a conical portion at its leading end, a rod portion 56 formed adjacent to the rear of the head portion 55, a return check ring 57 disposed in the surroundings of the rod portion 56, and a seal ring 58 mounted on the front end of the screw main body 52. A resin flow path 75 as a third molding material flow path is formed between the rod portion 56 and the return check ring 57.

Further, a threaded portion (not shown) is formed at the rear of the rod portion 56, and a threaded hole (not shown) is formed to be opened at the front end face of the pressure member 54. Therefore, by thread-engaging the threaded portion with the threaded hole, the injection section 46 can be attached to the screw main body 52 in a state where the seal ring 58 is pushed against the front end of the pressure member 54. In addition, a screw head 61 as an injection member head section is constituted by the head portion 55, the rod portion 56, and the threaded portion, and the back-flow prevention device 62 which prevents resin from flowing back at the time of an injection process is constituted by the return check ring 57 and the seal ring 58.

Then, at the time of a measuring process, if the return check ring 57 is moved forward with respect to the rod portion 56 in accordance with the retreat of the screw 20, so that the return check ring is separated from the seal ring 58, the resin flow paths 74 and 75 are communicated with each other, so that the seal by the back-flow prevention device 62 is removed. Also, at the time of an injection process, if the return check ring 57 is moved backward with respect to the rod portion 56 in accordance with the advance of the screw 20, so that the return check ring is brought into contact with the seal ring 58, communication between the flow paths 74 and 75 is blocked off, so that the seal by the back-flow prevention device 62 is made.

In addition, the driving device includes a motor for measuring, which serves as a driving section for measuring, and a motor for injection, which serves as a driving section for injection.

A resin supply port 65 as a molding material supply port is formed at a predetermined position in the vicinity of the back end of the heating cylinder 17, and the resin supply port 65 is formed at a place which faces the back end portion of the groove 67 in a state where the screw 20 is placed at an advance limit position in the heating cylinder 17.

In addition, an introduction section 81 as a molding material supply device for inputting resin is mounted on the resin supply port 65, and a hopper 82 as a molding material containing section which contains resin is mounted on the upper end of the introduction section 81. The resin contained in the hopper 82 is sent to the resin supply port 65 through the introduction section 81 and then supplied from the resin supply port 65 into the heating cylinder 17.

The introduction section 81 includes a cylinder portion 83 disposed to extend in a horizontal direction, a tubular guide portion 84 disposed to extend downward from the front end of the cylinder portion 83, a feed screw 85 disposed to be able to rotate in the cylinder portion 83, a feed motor 86 as a driving section for supply, which rotates the feed screw 85, a heater h21 as a heating member, which is disposed on the outer circumference of the cylinder portion 83, and the like. The cylinder portion 83 is connected at its back end to the hopper 82 and communicated at its front end with the guide portion 84.

Therefore, if the feed screw 85 is rotated by the driving of the feed motor 86, the resin in the hopper 82 is supplied into the cylinder portion 83, advances along a groove formed on an outer circumferential surface of the feed screw 85, is sent from the front end of the feed screw 85 into the guide portion 84, and then falls in the guide portion 84, thereby being supplied into the heating cylinder 17. At this time, each pellet 19 falls in a line in the guide portion 84, thereby being supplied into the heating cylinder 17 through the resin supply port 65.

In the vicinity of the resin supply port 65 of the heating cylinder 17, an annular cooling jacket 88 as a cooling device is formed to surround the heating cylinder 17, the resin supply port 65, and the lower end of the guide portion 84, and water as a cooling medium is supplied to the cooling jacket 88. Therefore, due to the water, the resin which falls in the guide portion 84 and is supplied into the heating cylinder 17 through the resin supply port 65 is prevented from being melted.

Then, in order to control the injection molding machine and drive the motor for injection, the motor for measuring, the feed motor 86, and the like or energize the heaters h11 to h13 and h21, a control section (not shown) is provided, and the control section includes a CPU as an arithmetic device, a memory as a recording device, a display section, an operation section, and the like as well as performing various operations in accordance with a predetermined program, data, and the like, thereby functioning as a computer.

In the injection device 31 having the above-described configuration, at the time of the measuring process, if the feed screw 85 and the screw 20 are rotated in a positive direction by the positive direction driving of the feed motor 86 and the motor for measuring, the resin supplied from the hopper 82 into the cylinder portion 83 advances along a groove of the feed screw 85, is preheated in the interval, supplied from the front end of the cylinder portion 83 into the guide portion 84, and then supplied into the heating cylinder 17 through the resin supply port 65. In addition, the resin in the cylinder portion 83 is preheated to a temperature which does not cause melting, for example, a predetermined temperature which is equal to or less than a glass transition point.

Then, the resin supplied into the heating cylinder 17 advances along the first and second groove portions 67a and 67b and is heated and melted by the heaters h11 to h13. In addition, as the resin advances over a range from a pressure increase starting point qt1, which is located at a predetermined distance from the pressure member 54 and represents a resin pressure increase point, to the front end of the screw main body 52, the pressure of the resin is gradually increased.

Subsequently, the resin passes through the resin flow path 73, so that the pressure of the resin is further increased, thereafter, advances through the resin flow path 74, and is sufficiently kneaded in the interval.

Also, at this time, since the return check ring 57 is relatively moved forward with respect to the rod portion 56, the resin flow paths 74 and 75 are communicated with each other, so that the resin in the resin flow path 74 is sent to the front of the screw head 61 through the resin flow path 75. Therefore, in a state where the screw 20 is placed at a retreat limit position in the heating cylinder 17, the melted resin for 1 shot is stored in front of the screw head 61. In addition, notches (not shown) are formed in the head portion 55, so that the resin flow path 75 and the front of the screw head 61 are communicated with each other.

Next, at the time of the injection process, if the screw 20 advances by the driving of the motor for injection, the resin stored in front of the screw head 61 is injected from the injection nozzle 18, thereby filling up a cavity space of the metal mold device.

Incidentally, as previously described, at the screw main body 52, the pressure member 54 having a smooth outer circumferential surface is provided adjacent to the back-flow prevention device 62 over a predetermined range from the front end.

That is, in the measuring process, the resin supplied from the resin supply port 65 is led by the first and second flight portions 53a and 53b in accordance with the rotation of the screw 20, thereby advancing in the first and second groove portions 67a and 67b. However, if the resin reaches the pressure member 54, since a flight is not formed, the leading of the resin by the flight is not performed, so that an advance force of the resin is weakened.

Therefore, since the movement speed of the resin is lowered in the resin flow paths 73 and 74, the pressure member 54 functions as a movement suppression member, which suppresses the advance of the resin which advances in the first and second groove portions 67a and 67b from the rear. As a result, with respect to the resin in the first and second groove portions 67a and 67b, the advance thereof is suppressed, so that pressure is increased as it goes forward in a region in front of the pressure increase starting point qt1.

Further, in the pressure member 54, the inclined portion 71 has an outer diameter which is increased as it goes forward, so that a cross-sectional area of the resin flow path 73 is reduced as it goes forward, and also the outer diameter d2 of the large-diameter portion 72 is made to be larger than the flight root diameter d1 and smaller than the flight peak diameter Di.

Therefore, the function as the movement suppression member of the pressure member 54 can be further increased, so that the pressure of resin in a region in front of the pressure increase starting point qt1 can be further increased. In addition, if a radial distance from an outer circumferential surface of the body portion 45a to an outer circumferential edge of the flight 53 is t1, the distance t1 is expressed by an equation t1=(Di-d1)/2. Also, if a distance from an outer circumferential surface of the large-diameter portion 72 to a circumferential edge of the flight 53 is t2, the ratio t2/t1 of the distance t2 to the distance t1 is smaller than 1.

As a result, in a state where the screw 20 is placed at an advance limit position, a region from a molding material supply point qt2, which is set at a position of the back end of the resin supply port 65 and represents a resin supply point, to the pressure increase starting point qt1 constitutes a supply zone P11, a region from the pressure increase starting point qt1 to the front end of the flight forming section 45 constitutes a measuring zone (compression zone) P12, and a region from the front end of the flight forming section 45 to the front end of the pressure member 54 constitutes a kneading zone P13. Therefore, the same plasticization as that of an injection device in the past can be performed, so that the kneading properties of the resin can be sufficiently improved. Also, since the pressure of the resin after it has been melted can be increased in the kneading zone P13, the kneading properties can be further improved.

Also, since the pressure of the resin in the measuring zone P12 can be increased only by forming the large-diameter portion 72, it is not necessary to change the flight root diameter d1 in an axial direction of the flight forming section 45.

Therefore, the shape of the screw 20 can be simplified, so that the cost of the screw 20 can be lowered.

Incidentally, if the resin supplied through the resin supply port 65 coheres while advancing in the heating cylinder 17, so that a solid bed b (refer to Fig. 2) composed of a plurality of resin pellets 19 is formed, it takes time to completely melt all the pellets 19.

Therefore, in this embodiment, a groove depth setting section for preventing the solid bed b from being formed is set in a predetermined section in a longitudinal direction of the flight forming section 45 over a range from the molding material supply point qt2 to the front, and in the groove depth setting section, when a diameter of the pellet 19 is $\delta 1$, the ratio $\gamma 1$ of a groove depth $\tau 1$ of the groove 67 to the diameter $\delta 1$ is $\gamma 1=\tau 1/\delta 1$ and has the relationship of $1\leq\gamma 1\leq 2.5$, preferably, $1\leq\gamma 1\leq 2.0$. Also, since the groove depth $\tau 1$ is equal to the distance t1, $\tau 1$ is equal to (Di-d1)/2.

In this embodiment, the pellet 19 has a spherical shape. However, in a case where the pellet has a shape other than a spherical shape, a diameter $\delta 1$ of the pellet 19 may also be set to be the largest one among the diameters of the respective portions of the pellet 19, that is, the largest diameter, the smallest one among the diameters of the respective portions of the pellet 19, that is, the smallest diameter, or a value intermediate between the largest diameter and the smallest diameter, for example, an average value.

It is preferable if the groove depth setting section is set over an axial length enough for preventing the solid bed b from being formed, and it is preferable that the groove depth setting section be formed in a section from the molding material supply point qt2 when the screw 20 is placed at an advance limit position, to the front end of the flight forming section 45, that is, over the entirety in an axial direction of the flight forming section. Also, the groove depth setting section may also be set in a section from the molding material supply point qt2 to the front end of the supply zone P11, a section from the molding material supply point qt2 to a place where resin completely melts, or a section from the molding material supply point qt2 to the front by a length of a screw stroke.

In addition, the groove depth setting section may also be represented by a length in an axial direction of the screw 20 or a length of the groove 67.

Next, a state where resin melts will be explained.

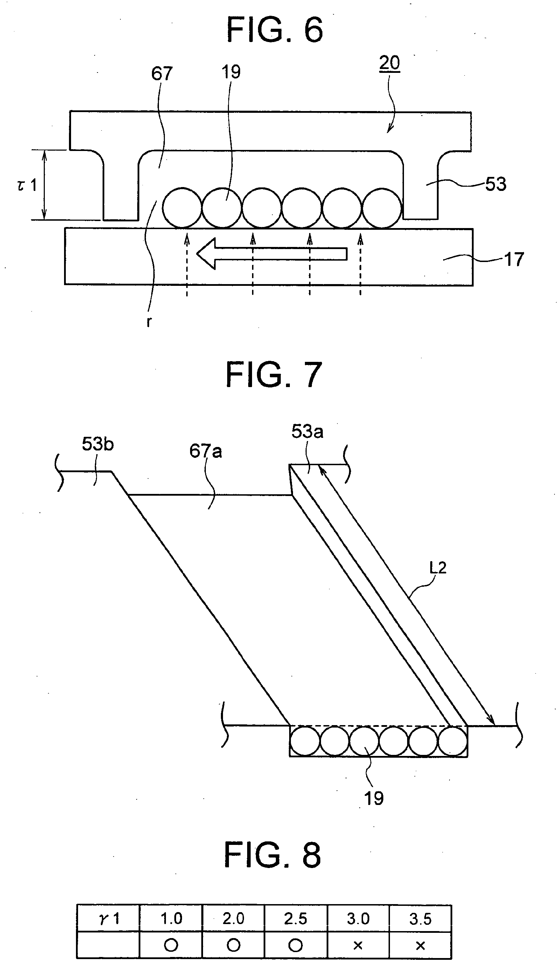

Fig. 6 is a conceptual diagram showing a state where resin melts in the first embodiment of the present invention, and Fig. 7 is a diagram explaining the extended distance of the injection device in the first embodiment of the present invention.

In the drawings, reference numeral 17 denotes the heating cylinder; 20, the screw; 53a and 53b, the first and second flight portions; 67a, the first groove portion; 19, the pellet; and r, a melt pool formed by the melted resin.

As previously described, since the ratio $\gamma 1$ has the relationship of $1\leq\gamma 1\leq 2.5$, preferably, $1\leq\gamma 1\leq 2.0$, there is almost no overlap between two pellets 19 in a depth direction (a radial direction) of the groove 67 (Fig. 5) in the first groove portion 67a. Therefore, the respective pellets 19 advance along the first groove portion 67a in the direction of a solid arrow in a state where they are arranged sideways without cohering. Also, in the injection device 31 (Fig. 4), in order to make the melted resin advance when the screw 20 rotates, a friction coefficient of the inner circumferential surface of the heating cylinder 17 is set to be larger than a friction coefficient of the outer circumferential surface of the screw 20. Therefore, in accordance with the rotation of the screw 20, each pellet 19 advances in the first groove portion 67a while rolling (rotating) due to friction with the inner circumferential surface of the heating cylinder 17.

In this manner, in this embodiment, since the solid bed b is not formed by each pellet 19, a plurality of pellets 19 are not formed in an overlapping manner in a depth direction of the first groove portion 67a. As a result, heat can be efficiently transferred to each pellet 19, so that the time required to melt all pellets 19 can be shortened. Also, as shown in Fig. 7, the extended distance L2 of the groove 67 until the resin completely melts can be shortened.

Also, since each pellet 19 is melted with the transmission of heat of the heaters h11 to h13, but not melted by shearing heat generation, the resin can be uniformly melted.

Further, groove depths of the first and second groove portions 67a and 67b are made to be smaller, and the pressure member 54 for narrowing the resin flow path 74 is disposed adjacent to the back-flow prevention device 62 in a predetermined range from the front end of the flight forming section 45 to the front.

Therefore, since each pellet 19 advances in the first and second groove portions 67a and 67b while coming into contact with the inner circumferential surface of the heating cylinder 17 and rolling, as shown in Fig. 6, the heat of the heaters h11 to h13 is transferred to each pellet 19 through the heating cylinder 17 by rolling heat transfer, as shown by a dashed arrow. As a result, resin can be efficiently and uniformly heated and melted, so that the quality of a molded article can be improved.

Fig. 8 is a diagram showing the evaluation results regarding whether or not the solid bed has been formed in the first embodiment of the present invention.

In the drawing, the symbol × represents that the solid bed b has been formed, and O represents that the solid bed b has not been formed.

As shown in the drawing, in a case where the ratio $\gamma1$ is 1.0, 2.0, and 2.5, the solid bed b is not formed, and in a case where the ratio $\gamma1$ is 3.0, and 3.5, the solid bed b is formed.

In addition, in the injection device 31 having the above-described configuration, the resin flow path 74 between the pressure member 54 and the heating cylinder 17 is narrowed. Therefore, if a bias occurs in the flow of resin at the front end of the flight forming section 45, that is, the measuring zone P13 (Fig. 4), resin cannot smoothly enter into the resin flow path 74. Then, if a bias occurs in the flow of resin, retention of the resin occurs at a portion where flow velocity is low, so that burning easily occurs in the resin, whereby a molding defect occurs in a molded article.

Further, in the injection device 31 having the above-described configuration, since the groove depth is reduced, an escape space of the pellets 19 supplied into the heating cylinder 17 through the resin supply port 65 in the supply zone P11 is reduced by a corresponding amount, so that a force which is applied to the pellet 19 in accordance with the rotation of the screw 20 is increased, whereby a shearing force is generated at the pellet 19 and the generated shearing force is applied to the flight 53 of the screw 20.

Therefore, as previously described, the flight 53 has a plurality of, in this embodiment, two, first and second flight portions 53a and 53b, and the first and second groove portions 67a and 67b are formed along the first and second flight portions 53a and 53b.

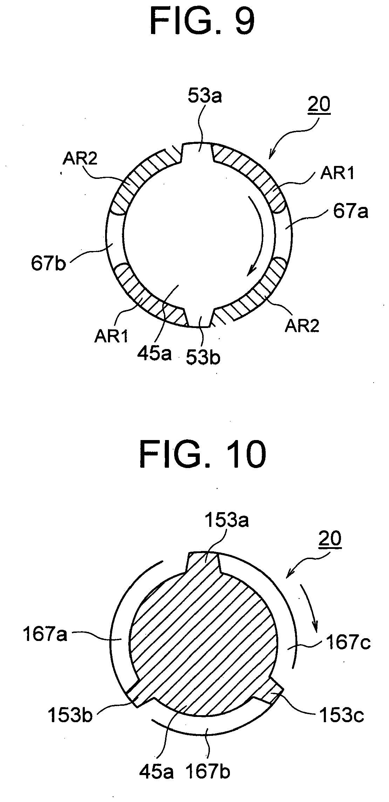

Fig. 9 is a cross-sectional view of the screw in a region adjacent to the pressure member in the first embodiment of the present invention. In addition, Fig. 9 is a cross-sectional view taken along line A-A of Fig. 5.

In the drawing, reference numeral 20 denotes the screw; 45a, the body portion; 53a and 53b, the first and second flight portions; and 67a and 67b, the first and second groove portions.

In this case, between the flight portions on one side among the first and second flight portions 53a and 53b, the flight portion on the other side is formed, and the groove 67 is divided into the first and second groove portions 67a and 67b.

Therefore, in the measuring zone P13, a bias can be prevented from occurring in the flow of resin in the flight forming section 45, so that the flow of resin which enters into the resin flow path 74 can be made to be uniform.

Further, if the screw 20 is rotated in the direction of an arrow, since the flow velocity of resin becomes higher in the neighborhood AR1 on a further downstream side than the first and second flight portions 53a and 53b in the rotation direction and the flow velocity of resin becomes lower in the neighborhood AR2 on a further upstream side than the first and second flight portions 53a and 53b, in the resin flow path 74, resin with an increased flow velocity is sufficiently supplied, so that a bias can be prevented from occurring in the flow of the resin.

As a result, retention of resin can be prevented from occurring, so that burning can be prevented from occurring in the resin. Therefore, a molding defect can be prevented from occurring in a molded article.

Further, since each of the first and second flight portions 53a and 53b is formed at a constant flight pitch, the first and second flight portions 53a and 53b are disposed at an equal pitch (180° intervals) in a circumferential direction at an arbitrary position in an axial direction of the screw 20. In addition, the heights of the first and second flight portions 53a and 53b are equal at an arbitrary position in an axial direction of the screw 20.

Therefore, since the center of gravity of the screw 20 is placed at the center at any position in an axial direction of the screw 20, even if the screw 20 rotates at a high speed, vibration does not occur in the screw 20. As a result, a molding cycle can be shortened.

In addition, since between the flight portions on one side among the first and second flight portions 53a and 53b, the flight portion on the other side is formed and the groove 67 is divided into the first and second groove portions 67a and 67b, a force which is applied to the whole of the screw 20 when the pellets 19 are supplied into the heating cylinder 17 through the resin supply port 65 in the supply zone P11 is equal to a force which is applied to the whole of a screw having a single flight structure which is provided with a one-section flight, that is, only one flight portion. However, surface pressure Pd which is applied to each of the first and second flight portions 53a and 53b is lowered and becomes half of surface pressure Ps which is applied to a flight of the screw having single flight structure, as expressed by the following expression.

$$Pd = Ps/2$$

Therefore, the screw 20 can be prevented from being broken, so that durability of the injection device 31 can be improved.

In addition, a resin feed force in the flight forming section 45 can be increased, so that plasticizing capacity in the screw 20 can be improved.

In addition, in the supply zone P11, a gap between the pellets 19 functions as a heat-insulating air layer. Therefore, in a case where time required for making the temperature of the screw 20 reach the proper temperature after the starting of operation of the injection molding machine is long, a further large shearing force is generated at the pellet 19.

However, in this embodiment, since the groove 67 is divided into the first and second groove portions 67a and 67b, it can be suppressed that the first and second groove portions 67a and 67b function as heat-insulating air layers. Also, since a contact area of the heating cylinder 17 with the first and second flight portions 53a and 53b is increased, heat which is generated by the heaters h11 to h13 can be efficiently transferred to the screw 20. Therefore, the time required for making the temperature of the screw 20 reach the proper temperature is shortened, so that it can be suppressed that a large shearing force is generated at the pellet 19.

Next, a second embodiment of the present invention in which the flight is formed by three flight portions will be explained.

Fig. 10 is a cross-sectional view of a screw in the second embodiment of the present invention.

In the drawing, reference numeral 20 denotes the screw as an injection member and also as a measuring member; 45a, the body portion; 153a, 153b, and 153c, first, second, and third flight portions; and 167a, 167b, and 167c, first, second, and third groove portions.

In this case, between the flight portions on one side among the first, second, and third flight portions 153a, 153b, and 153c, the other two flight portions are formed, and areas between the respective flight portions are divided into the first, second, and third groove portions 167a, 167b, and 167c. Therefore, a bias can be further prevented from occurring in the flow of resin in the flight forming section 45 as a plasticizing zone, so that the flow of resin which enters into the resin flow path 74 (Fig. 5) in the measuring zone P13 can be made to be further uniform.

In addition, if the screw 20 is rotated in the direction of an arrow, resin with an increased flow velocity is sufficiently supplied to the resin flow path 74, so that a bias can be prevented from occurring in the flow of resin in the resin flow path 74.

As a result, retention of resin can be prevented from occurring, so that burning can be prevented from occurring in the resin. Therefore, a molding defect can be prevented from occurring in a molded article.

Further, the first, second, and third flight portions 153a, 153b, and 153c are disposed at an equal pitch (120° intervals) in a circumferential direction at any position in an axial direction of the screw 20. Therefore, since the center of gravity of the screw 20 is placed at the center at any position in an axial direction of the screw 20, even if the screw 20 is rotated at a high speed, vibration does not occur in the screw 20. As a result, a molding cycle can be shortened.

In addition, if the screw 20 is rotated in the direction of an arrow, resin with an increased flow velocity is sufficiently supplied to the resin flow path 74, so that surface pressure Pd which is applied to each of the first, second, and third flight portions 153a, 153b, and 153c in the supply zone P11 can be further lowered.

In addition, the present invention is not to be limited to the respective embodiments, but can be variously modified within the scope of the invention as defined by the appended claims.

**Claims**

1. A combination of a screw (20) disposed to be able to rotate in a cylinder member (17) and connected at its back end to a driving device, and a molding material, the screw (20) comprising:

   (a) a flight forming section (45) including a main body portion (45a) and a flight (53) formed so as to project on an outer circumferential surface of the main body portion (45a); and
   (b) a pressure member (54) disposed in front of the flight forming section (45) and including a smooth outer circumferential surface;

   wherein the flight (53) is formed by a plurality of flight portions (53a, 53b) in a predetermined section of the flight forming section (45);
   **characterized in that**
   the ratio γ1 of a groove depth τ1 to a diameter 51 has the relationship of $1 \leq \gamma1 < 2.5$, where a diameter of the molding material is $\delta1$ and a groove depth of a groove (67) formed along the flight (53) is $\tau1$ in a groove depth setting section set over a range from a molding material supply point (qt2) to the front.

2. The combination according to Claim 1, wherein the predetermined section is set in a supply zone (P11) of the flight forming section (45).

3. The combination according to Claim 1, wherein the predetermined section is set in a measuring zone (P12) of the flight forming section (45).

4. The combination according to Claim 1, wherein the predetermined section is set over the entirety in an axial direction of the flight forming section (45).

5. The combination according to Claim 1, wherein the groove depth setting section is set in a section from the molding material supply point (qt2) to the front end of a supply zone (P11).

6. The combination according to Claim 1, wherein the groove depth setting section is set in a section from the molding material supply point (qt2) to the front by a length of a screw stroke.

7. The combination according to Claim 1, wherein the groove depth setting section is set over the entirety in an axial direction of the flight forming section (45).

8. The combination according to Claim 1, wherein the respective flight portions (53a, 53b) are formed at an equal flight pitch.

9. The combination according to Claim 1, wherein the respective flight portions (53a, 53b; 153a, 153b, 153c) are formed at an equal height at an arbitrary position in an axial direction.

10. A combination of an injection device (31) and a molding material, the injection device (31) comprising the screw (20) according to any one of Claims 1 to 9.

**Patentansprüche**

1. Kombination einer Schnecke (20), die so angeordnet ist, dass sie sich in einem Zylinderglied (17) drehen kann und an ihrem Rückende mit einer Antriebseinrichtung verbunden ist, und eines Formmaterials, wobei die Schnecke (20) Folgendes aufweist:

(a) einen Gewindegangformungsabschnitt (45), der einen Hauptkörperteil (45a) und einen Gewindegang (53) aufweist, der so gebildet ist, dass er auf einer Außenumfangsoberfläche des Hauptkörperteils (45a) vorragt; und
(b) ein Druckglied (54), das vor dem Gewindegangformungsteil (45) angeordnet ist und eine glatte Außenumfangsoberfläche aufweist;

wobei der Gewindegang (53) durch eine Vielzahl von Gewindegangteilen (53a, 53b) in einem vorbestimmten Abschnitt des Gewindegangformungsabschnitts (45) gebildet wird;
**dadurch gekennzeichnet, dass**
das Verhältnis $\gamma1$ einer Nuttiefe $\tau1$ zu einem Durchmesser $\delta1$ die Beziehung $1 \leq \gamma1 < 2,5$ hat, wobei ein Durchmesser des Formmaterials $\delta1$ ist und eine Nuttiefe einer Nut (67), die entlang des Gewindegangs (53) gebildet ist, $\tau1$ in einem Nuttiefeneinstellungsabschnitt ist, der über einen Bereich von einem Formmateriallieferpunkt (qt2) zu der Vorderseite eingestellt ist.

2. Kombination gemäß Anspruch 1, wobei der vorbestimmte Abschnitt in einer Lieferzone (P11) des Gewindegangformungsabschnitts (45) eingestellt wird.

3. Kombination gemäß Anspruch 1, wobei der vorbestimmte Abschnitt in einer Messzone (P12) des Gewindegangformungsabschnitts (45) eingestellt wird.

4. Kombination gemäß Anspruch 1, wobei der vorbestimmte Abschnitt über die Gesamtheit in einer axialen Richtung des Gewindegangformungsabschnitts (45) eingestellt wird.

5. Kombination gemäß Anspruch 1, wobei der Nuttiefeneinstellungsabschnitt in einem Abschnitt von dem Formmateriallieferpunkt (qt2) zu dem Vorderende einer Lieferzone (P11) eingestellt wird.

6. Kombination gemäß Anspruch 1, wobei der Nuttiefeneinstellungsabschnitt in einem Abschnitt von dem Formmateriallieferpunkt (qt2) zu der Vorderseite durch eine Länge eines Schneckenhubs eingestellt wird.

7. Kombination gemäß Anspruch 1, wobei der Nuttiefeneinstellungsabschnitt über die Gesamtheit in einer axialen Richtung des Gewindegangformungsabschnitts (45) eingestellt wird.

8. Kombination gemäß Anspruch 1, wobei die entsprechenden Gewindeteile (53a, 53b) mit einer gleichen Gewindegangteilung gebildet sind.

9. Kombination gemäß Anspruch 1, wobei die entsprechenden Gewindeteile (53a, 53b; 153a, 153b, 153c) bei einer gleichen Höhe bei einer beliebigen Position in einer axialen Richtung gebildet sind.

10. Kombination einer Einspritzvorrichtung (31) und eines Formmaterials, wobei die Einspritzvorrichtung (31) die Schnecke (20) gemäß einem der Ansprüche 1 bis 9 aufweist.

**Revendications**

1. Combinaison d'une vis (20) disposée de manière à pouvoir tourner dans un élément cylindrique (17) et connectée au niveau de son extrémité arrière à un dispositif d'entraînement, et d'un matériau de moulage, la vis (20) comprenant :

   (a) une section formant filet (45) comprenant une portion de corps principal (45a) et un filet (53) formé de façon à faire saillie sur une surface circonférentielle extérieure de la portion de corps principal (45a) ; et
   (b) un élément de pression (54) disposé en face de la section formant filet (45) et comprenant une surface circonférentielle extérieure lisse ;

   dans lequel le filet (53) est formé par une pluralité de portions de filet (53a, 53b) dans une section prédéterminée de la section formant filet (45) ;
   **caractérisé en ce que**
   le rapport $\gamma 1$ entre une profondeur de gorge $\tau 1$ et un diamètre $\delta 1$ est conforme à la relation $1 \leq \gamma 1 < 2,5$ , où le diamètre du matériau de moulage est $\delta 1$ et la profondeur de gorge d'une gorge (67) formée le long du filet (53) est $\tau 1$ dans une section de définition de profondeur de gorge définie sur une plage allant d'un point d'alimentation en matériau de moulage (qt2) jusqu'à l'avant.

2. Combinaison selon la revendication 1, dans laquelle la section prédéterminée est définie dans une zone d'alimentation (P11) de la section formant filet (45).

3. Combinaison selon la revendication 1, dans laquelle la section prédéterminée est définie dans une zone de mesure (P12) de la section formant filet (45).

4. Combinaison selon la revendication 1, dans laquelle la section prédéterminée est définie sur la totalité, dans une direction axiale, de la section formant filet (45).

5. Combinaison selon la revendication 1, dans laquelle la section de définition de profondeur de gorge est définie dans une section allant du point d'alimentation en matériau de moulage (qt2) jusqu'à l'extrémité avant d'une zone d'alimentation (P11).

6. Combinaison selon la revendication 1, dans laquelle la section de définition de profondeur de gorge est définie dans une section allant du point d'alimentation en matériau de moulage (qt2) jusqu'à l'avant par la longueur d'un coup de vis.

7. Combinaison selon la revendication 1, dans laquelle la section de définition de profondeur de gorge est définie sur l'intégralité, dans une direction axiale, de la section formant filet (45).

8. Combinaison selon la revendication 1, dans laquelle les portions de filet respectives (53a, 53b) sont formées avec un pas de filet égal.

9. Combinaison selon la revendication 1, dans laquelle les portions de filet respectives (53a, 53b ; 153a, 153b, 153c) sont formées avec une hauteur égale à une position arbitraire dans une direction axiale.

10. Combinaison d'un dispositif d'injection (31) et d'un matériau de moulage, le dispositif d'injection (31) comprenant la vis (20) selon l'une quelconque des revendications 1 à 9.

FIG. 1

# FIG. 2

# FIG. 3

FIG. 4

# FIG. 5

EP 2 258 533 B1

# FIG. 6

# FIG. 7

# FIG. 8

| $\gamma 1$ | 1.0 | 2.0 | 2.5 | 3.0 | 3.5 |
|---|---|---|---|---|---|
|  | ○ | ○ | ○ | × | × |

# FIG. 9

# FIG. 10

**EP 2 258 533 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004050415 A
- US 3160916 A
- WO 2007069522 A1
- US 2896253 A
- JP 2002248664 A